# EUROPÄISCHE PATENTSCHRIFT

(11) **EP 3 742 148 B1**
(45) Veröffentlichungstag und Bekanntmachung des Hinweises auf die Patenterteilung: **16.02.2022**
(21) Anmeldenummer: 20186105.1
(22) Anmeldetag: 28.03.2017
(51) Int. Cl.: G01M 3/20

(54) **VERFAHREN ZUM TESTEN EINER GASLECKSUCHVORRICHTUNG**
METHOD FOR TESTING A GAS LEAK DETECTION DEVICE
MÉTHODE POUR TESTER UN DISPOSITIF DE DÉTECTION DE FUITES DE GAZ

(30) Priorität: 31.03.2016 DE 102016205381
(43) Veröffentlichungstag der Anmeldung: 25.11.2020
(62) Teilanmeldung aus: 17713949.0
(73) Patentinhaber: Inficon GmbH, 50968 Köln (DE)
(72) Erfinder: Bruhns, Hjalmar, 50968 Köln (DE); Franke, Ernst, 50968 Köln (DE); Kilian, Ralf, 50968 Köln (DE); Liebich, Jörn, 50968 Köln (DE); Moser, Norbert, 50968 Köln (DE); Puchalla-König, Jochen, 50968 Köln (DE); Rolff, Norbert, 50968 Köln (DE); Rolff, Randolf, 50968 Köln (DE); Wetzig, Daniel, 50968 Köln (DE)
(74) Vertreter: dompatent von Kreisler Selting Werner - Partnerschaft von Patent- und Rechtsanwälten mbB

(56) Entgegenhaltungen:
- JP-A- H02 120 635
- US-A- 5 907 092

## Beschreibung

Die Erfindung betrifft ein Verfahren zur Gaslecksuche mit einer Testgassprühvorrichtung.

Es ist bekannt, Testgas wie zum Beispiel Helium, mit Hilfe einer Sprühpistole auf einen Prüfling aufzusprühen, der von einer Vakuumanordnung evakuiert wird. Die Vakuumanordnung weist dabei eine Vakuumpumpe zum Evakuieren des Prüflings und einen Gasdetektor zum Detektieren des Testgasanteils in dem evakuierten Gasstrom auf. Falls der Prüfling ein Leck aufweist und sich der von der Sprühpistole ausgegebene Testgasstrom dem Leck nähert, steigt der Testgasanteil in dem evakuierten Gasstrom. Der Anstieg des Testgasanteils in dem evakuierten Gasstrom wird dabei als Hinweis verstanden, dass sich die Sprühpistole einem Leck im Prüfling nähert. Durch Beobachten des Testgasanteils in dem abgesaugten Gasstrom während die Sprühpistole über dem Prüfling bewegt wird, kann somit die Position eines Lecks ermittelt werden. Die Sprühpistole kann beispielsweise eine Druckluftpistole sein, die über einen Schlauch mit einer Testgasdruckflasche oder mit einer mit dem Testgas befüllten Gummiblase verbunden ist. Im Falle einer Gasflasche wird der Druck an der Druckluftpistole und damit der Durchfluss über einen Druckminderer in der Gasflasche eingestellt.

Grundsätzlich besteht bei dieser Art der lokalisierenden Vakuum-Dichtheitsprüfung ein Problem darin, dass echte Leckagesignale nicht immer zuverlässig von störenden Signalen unterscheidbar sind. Störsignale können verursacht werden durch Rauschen des Untergrundsignals, Drift des Untergrundsignals, an großen Prüflingen mit mehreren Leckagestellen, zu denen ungewollt Testgas gelangt, oder durch lange Verzögerungszeiten wegen Laufzeit und Zeitkonstante im Vakuumsystem, wodurch die Zuordnung von Leckagesignalen erschwert wird.

Ein weiterer Nachteil entsteht, wenn der Vakuumanschluss und die zu prüfenden Stellen örtlich weit auseinander liegen. Eine korrekte Dosierung der gesprühten Testgaswolke ist dann erschwert. Die Lecksuche muss oft mit zwei Personen durchgeführt werden. Schwere Testgasflaschen müssen transportiert werden, beispielsweise über mehrere Etagen hinweg getragen werden.

Der Erfindung liegt die Aufgabe zugrunde, ein verbessertes Verfahren zur Lokalisation eines Gaslecks an einem Prüfling unter Verwendung einer Testgassprühvorrichtung bereitzustellen.

JP H02 120635 A beschreibt eine Prüfgassprühvorrichtung mit einer Anzeige für die Flussrate des versprühten Prüfgases.

US 5,907,092 A beschreibt einen Gegenstrom-Schnüffellecksucher.

Das erfindungsgemäße Verfahren ist definiert durch die Merkmale von Anspruch 1.

Die Sprühvorrichtung ist zur Erfassung mindestens eines Zeitpunkts des Sprühvorgangs, zum Beispiel des Sprühbeginns, ausgebildet. Zwischen der Sprühvorrichtung und der das Messsignal des Testgasdetektors auswertenden Auswerteeinheit besteht eine Datenkommunikationsverbindung. Über die Datenkommunikationsverbindung können die von der Sprühvorrichtung erfassten Zeiten und der mindestens eine Zeitpunkt des Sprühvorgangs an die Auswerteeinheit übertragen werden. Die Auswerteeinheit ist dazu ausgebildet, die von der Sprühvorrichtung übertragenen Zeitpunkte mit dem jeweiligen Messsignal zu korrelieren. Dadurch ist es möglich, zu erkennen, ob der Anstieg des Testgaspartialdrucks im Messsignal durch das Besprühen mit der Testgassprühpistole verursacht wird. Vorteilhafterweise wird auch der Zeitpunkt des Endes des Testgassprühens von der Sprühvorrichtung an die Auswerteeinheit übermittelt und mit dem Messsignal in der Auswerteeinheit korreliert. Bei der Sprühvorrichtung kann es sich um eine Sprühpistole handeln, die über einen Schlauch mit einer das Testgas enthaltenden Druckgasquelle verbunden ist.

Bei einer vorteilhaften Ausgestaltung der Erfindung erzeugt die Sprühvorrichtung eine Serie von mehreren kurzen Testgaspulsen, das heißt das Testgas wird gepulst von der Sprühvorrichtung ausgegeben. Dabei werden mindestens der Zeitpunkt des Beginns einer Pulsserie an die Auswerteeinheit übertragen und vorzugsweise auch die Zeitpunkte des jeweiligen Endes einer Testgaspulsserie.

Insbesondere kann auch die Dauer der Testgasabgabe elektronisch erfasst und an die Auswerteeinheit übermittelt werden. Die Aufbringung des Testgases in einer bestimmten Pulsfolge kann eine Unterscheidung von störenden Testgasuntergrundkonzentrationen ermöglichen, da diese konstant oder zumindest nur langsam veränderlich sind, während ein durch ein Leck in den Prüfling eindringendes Testgas aus der Sprühvorrichtung nur während des Besprühens eindringen kann.

Vorteilhafterweise können auch das Messsignal oder der zeitliche Verlauf des Messsignals von der Auswerteeinheit an die Sprühvorrichtung beziehungsweise an ein in der Nähe der Sprühvorrichtung angeordnetes Ausgabegerät, wie zum Beispiel einen Monitor, übermittelt werden.

Grundsätzlich basiert die Erfindung somit auf dem Gedanken, Zeitpunkte der Sprühaktion mit der Sprühvorrichtung zu erfassen und an die Auswerteeinheit zu übertragen, um dort das Messsignal mit den Sprühzeitpunkten zu korrelieren.

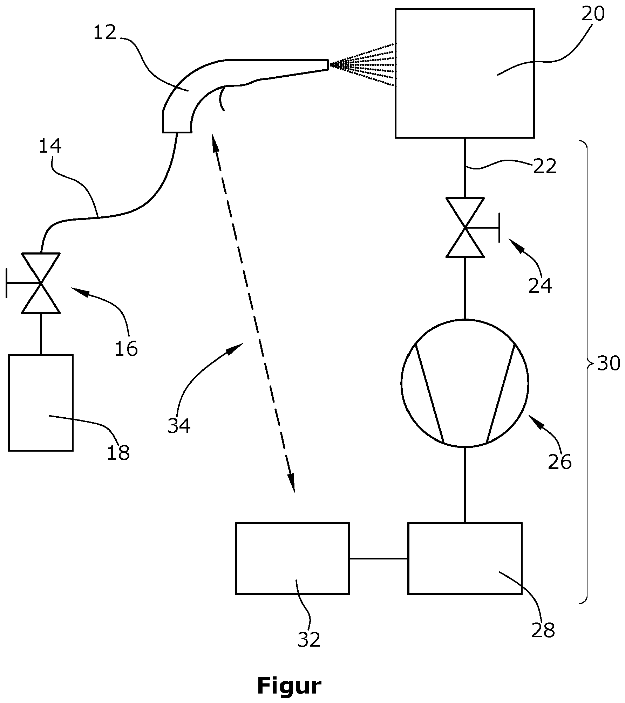

Im Folgenden wird anhand der Figur ein Ausführungsbeispiel der Erfindung näher erläutert.

Eine Sprühpistole 12 ist über einen Druckluftschlauch 14 und ein Absperrventil 16 mit einer druckbeaufschlagten Heliumquelle 18 verbunden. Das Absperrventil 16 kann alternativ in der Sprühpistole 12 angeordnet sein. Das Helium ist das Testgas, mit dem der Prüfling 20 besprüht wird, um ein Leck an dem Prüfling zu detektieren und zu lokalisieren.

Der Prüfling 20 ist über eine gasleitende Verbindung 22 über ein Absperrventil 24 mit einer Vakuumpumpe 26 zum Evakuieren des Prüflings 20 verbunden. Stromabwärts der Vakuumpumpe 26 ist ein Gasdetektor in Form eines Massenspektrometers 28 angeordnet. Das Massenspektrometer 28 bestimmt den Heliumpartialdruck in dem aus dem Prüfling 20 abgesaugten Gasstrom. Die Elemente 22, 24, 26, 28 bilden eine Vakuumanordnung 30. Das Massenspektrometer 28 ist mit einer Auswerteeinheit 32 verbunden, die das Messsignal kontinuierlich auswertet und anzeigt.

In der Figur ist gestrichelt eine Datenkommunikationsverbindung 34 zwischen der Sprühpistole 12 und der Auswerteeinheit 32 dargestellt. Hierbei kann es sich um eine drahtlose Verbindung, zum Beispiel Funk, WLAN, Infrarot, Bluetooth, oder um eine kabelgebundene Datenverbindung handeln.

Erfindungsgemäß werden zumindest von der Sprühpistole 12 an die Auswerteeinheit 32 Zeitpunkte übertragen, nämlich zumindest der Zeitpunkt des Sprühbeginns und vorzugsweise auch die Sprühdauer und der Zeitpunkt des Sprühendes. Bei einem über das Ventil 16 steuerbaren gepulsten Sprühen werden Sprühbeginn, Dauer und Sprühende eines jeden Sprühpulses oder der Sprühpulsserie an die Auswerteeinheit 32 übertragen.

In umgekehrter Richtung werden von der Auswerteeinheit 32 an eine mit der Sprühpistole 12 verbundene oder in der Nähe der Sprühpistole 12 angeordnete (in der Figur nicht dargestellte) Ausgabeeinheit die Messsignale übertragen. Dadurch ist es möglich, dass der Benutzer eine einfache Sicht auf die Messergebnisse hat und die Sprühaktion entsprechend modifizieren kann. Sobald der Benutzer einen Anstieg der Heliumkonzentration erkennt, kann er die Sprühpistole 12 gezielt in die erforderliche Richtung führen, um den Sprühort zur Erzeugung des maximalen Leckagesignals zu ermitteln. Beispielsweise kann das Messsignal über die Datenverbindung 34 an ein Smartphone oder einen Tablet-PC übertragen werden.

Bei der Vakuumanordnung 30 kann es sich um einen Helium-Vakuum-Lecksucher handeln, der an das Testobjekt 20 angeschlossen ist. Bei der Anschlussstelle kann es sich um den Vorvakuumbereich eines mehrstufigen Pumpsystems an dem Prüfling handeln. Alternativ kann der Anschluss aber auch direkt an die Vakuumkammer oder den Auspuff der Vorvakuumpumpe des Pumpsystems erfolgen.

Die Reaktionszeit - die Vakuumzeitkonstante - des Systems wird ermittelt.

Hierzu ist erfindungsgemäß an die zu überprüfende Vakuumkammer ein Ansprüh-Stiftleck anzuflanschen. Dieses wird mit Helium dauerhaft besprüht, währenddessen wird der Signalverlauf vom Lecksucher erfasst. Das Stiftleck wird so lange besprüht, bis ein stabiles Signal am Lecksucher angezeigt wird. Aus dem Signalanstiegsverlauf kann die Vakuumzeitkonstante des Systems bestimmt werden. Alternativ kann die Zeitkonstante aus der Abklingkurve bestimmt werden, die nach dem Beenden des Helium-Sprühens gemessen wird. Typische Zeitkonstanten von Anlagen liegen im Bereich von 1 - 10 Sekunden und sind teilweise noch deutlich länger.

Bei der Dichtheitsprüfung setzt sich ein Sprühvorgang aus mehreren aufeinander folgenden Sprühpulsen zusammen. Mit Kenntnis der gemessenen Vakuumzeitkonstante des Systems kann die Dauer der Helium-Sprühpulse und der zeitliche Abstand zwischen den Pulsen festgelegt werden. Die Dauer der Pulse und der zeitliche Abstand der Pulse soll etwa eine halbe VakuumZeitkonstante oder weniger betragen. Bei Systemzeitkonstanten über 10 Sekunden werden Pulsdauern von 1/10 oder weniger gewählt. Die Anzahl der Sprühpulse pro Sprühvorgang soll etwa drei bis fünf sein. Die Dauer zwischen den einzelnen Pulsen kann verschieden sein. Je charakteristischer die Pulsfolge ist, umso besser ist die Signalfolge am Lecksucher bei einer gefundenen Leckage wiederzuerkennen.

Mit dieser festgelegten Folge von Helium-Pulsen (z.B. mit der Methode nach US 8,297,109 B2) wird zur Lokalisierung von undichten Stellen die Vakuumkammer an den Prüfstellen besprüht.

Die auf das Helium-Sprühen geprägte Pulsfolge wird während des Besprühens einer undichten Stelle auf den zeitlichen Verlauf des gemessenen Leckratensignals übertragen. Störungen des Signals durch Drift, Rauschen oder andere Ursachen, die dieses Pulsfolgemuster nicht aufweisen, oder zu früh bzw. zu spät bezogen auf den Sprühzeitpunkt auftreten, können bei der Signalbewertung so von echten Leckraten-Signalen unterschieden werden.

Zur Unterstützung der Pulsfolge kann zwischen den Heliumpulsen das Helium aktiv fortgeblasen werden, z.B. mit einem zyklisch anlaufenden Lüfter an der Sprühpistole.

Mit der Erfindung ist es möglich, die Auswertung der Messsignale von Störeinflüssen zu bereinigen. Der Bediener bekommt das Ergebnis direkt am Prüfort zur Verfügung und benötigt keinen direkten Kontakt zum Messgerät (dem Vakuumlecksucher). Dem Bediener können Empfehlungen zum Sprühverhalten an die Sprühpistole über die Datenverbindung 34 gesendet werden. Die Lecksuche ist mit nur einer Person durchführbar. Das Tragen von schweren Heliumflaschen kann entfallen. Der Heliumverbrauch kann reduziert werden. Eine kompakte Bauweise mit verbesserter Zugänglichkeit wird ermöglicht. Fehleinstellungen der Sprühpistole, wie beispielsweise zu viel oder zu wenig Helium, können verhindert werden. Zur Optimierung des Sprühvorgangs kann zur Lokalisierung viel Helium gesprüht werden und zur Quantifizierung sodann weniger Helium gesprüht werden.

## Patentansprüche

1. Verfahren zum Testen einer Gaslecksuchvorrichtung mit einer Testgassprühvorrichtung (12) und einer an ein Testobjekt (20) in Form eines Ansprüh-Stiftlecks angeflanschten Vakuumanordnung (30) in Form eines Helium-Vakuum-Lecksuchers mit einer Vakuumpumpe (26) zur Evakuierung des Testobjekts (20), mit einem stromabwärts des Testobjekt angeordneten Testgasdetektor (28), der als Messsignal den Testgasanteil in dem aus dem Testobjekt (20) evakuierten Gasstrom ermittelt, und mit einer das Messsignal auswertenden Auswerteeinheit (32), **gekennzeichnet durch** die Schritte:
Besprühen des Testobjekts (20) mit Helium,
Erfassen mindestens eines Zeitpunkts des Sprühvorgangs mit der Testgassprühvorrichtung (12),
Übertragen des erfassten Zeitpunkts an die auswertende Auswerteeinheit (32),
Korrelieren des übertragenen Sprühzeitpunktes mit dem Messsignal durch die Auswerteeinheit, um zumindest den Testgasanteil zu dem jeweiligen Zeitpunkt des Sprühvorgangs zu ermitteln, und
Ermitteln der Reaktionszeit der Vakuumanordnung (30).

2. Verfahren nach Anspruch 1, **dadurch gekennzeichnet, dass** die Reaktionszeit der Vakuumanordnung (30) durch Bestimmen der Vakuumzeitkonstante der Vakuumanordnung aus dem Anstiegsverlauf des Messsignals oder aus der Abklingkurve des Messsignals nach Beenden des Helium-Sprühens ermittelt wird.

3. Verfahren nach Anspruch 1 oder 2, **dadurch gekennzeichnet, dass** der Zeitpunkt des Sprühbeginns und/oder des Sprühendes von der Testgassprühvorrichtung (12) an die Auswerteeinheit (32) übertragen und mit dem Messsignal des Testgasdetektors korreliert werden.

4. Verfahren nach einem der Ansprüche 1-3, **dadurch gekennzeichnet, dass** das Messsignal an die 2. Testgassprühvorrichtung (12) oder an eine in der Nähe der Testgassprühvorrichtung (12) angeordnete Ausgabeeinheit während der Messung übertragen wird.

## Claims

1. A method for testing a gas leak detection device comprising a test gas spraying device (12) and a vacuum assembly (30) flanged to a test object (20) in form of a spray-on pen leak in form of a helium vacuum leak detector, including a vacuum pump (26) for evacuating the test object (20) and, arranged downstream of the test object (20), a test gas detector (28) measuring the test gas content in the gas flow evacuated from the test object (20) as a measurement signal, and including an evaluation unit (32) for evaluating the measurement signal,
**characterized by** the following steps:
spraying helium onto the test object (20),
detecting at least one time point of the spraying process by the test gas spraying device (12),
transmitting the detected time point to the evaluating evaluation unit (32),
correlating the transmitted time point of spraying with the measurement signal by the evaluation unit to detect at least the test gas content at the respective time point of the spraying process, and
determining the reaction time of the vacuum assembly (30).

2. The method according to claim 1, **characterized in that** the reaction time of the vacuum assembly (30) is determined by determining the vacuum time constant of the vacuum assembly from the increase curve of the measurement signal or from the decay curve of the measurement signal after terminating the spraying of helium.

3. The method according to claim 1 or 2, **characterized in that** the time point of the start of the spraying and/or the end of the spraying is transmitted by the test gas spraying device (12) to the evaluation unit (32) and correlated with the measurement signal of the test gas detector.

4. The method according to any one of claims 1-3, **characterized in that** the measurement signal is transmitted during the measurement to the test gas spraying device (12) or to an output unit arranged near the test gas spraying device (12).

## Revendications

1. Méthode pour tester un dispositif de détection de fuites de gaz avec un dispositif de projection de gaz de test (12) et un agencement de vide (30), raccordé à un objet de test (20) ayant la forme d'une fuite de tête de projection, ayant la forme d'un chercheur de fuite de vide à hélium avec une pompe à vide (26) pour évacuer l'objet de test (20), avec un détecteur de gaz de test (28) disposé en aval de l'objet de test qui détecte, comme signal de mesure, la partie de gaz de test dans le flux de gaz évacué de l'objet de test (20), et avec une unité d'évaluation (32) évaluant le signal de mesure,
**caractérisée par** les pas :
projeter de l'hélium sur l'objet de test (20),
saisir au moins un moment de l'action de projection avec le dispositif de projection de gaz de test (12),
transmettre le moment saisi à l'unité d'évaluation (32) effectuant l'évaluation, corréler, par l'unité d'évaluation, le moment de projection transmis avec le signal de mesure, afin de déterminer au moins la partie de gaz de test au moment respectif de l'action de projection, et
déterminer le temps de réaction de l'agencement de vide (30).

2. Méthode selon la revendication 1, **caractérisée en ce que** le temps de réaction de l'agencement de vide (30) est déterminé en déterminant la constante de temps de vide de l'agencement de vide à partir du déroulement de l'accroissement du signal de mesure ou à partir de la courbe de décroissance du signal de mesure après la fin de la projection d'hélium.

3. Méthode selon la revendication 1 ou 2, **caractérisée en ce que** le moment du début de projection et/ou de la fin de projection est transmis du dispositif de projection de gaz de test (12) à l'unité d'évaluation (32) et est corrélé avec le signal de mesure du détecteur de gaz de test.

4. Méthode selon l'une des revendications 1 à 3, **caractérisée en ce que** le signal de mesure est transmis pendant le mesurage au dispositif de projection de gaz de test (12) ou à une unité d'édition disposée à proximité du dispositif de projection de gaz de test (12).
